# EUROPEAN PATENT APPLICATION

(11) **EP 1 968 238 A1**
(43) Date of publication of application: **10.09.2008**
(21) Application number: 06775573.6
(22) Date of filing: 01.09.2006
(51) Int. Cl.: H04L 12/28

(54) **A METHOD AND SYSTEM FOR OBTAINING PATH MAXIMUM TRANSFER UNIT IN NETWORK**

(30) Priority: 26.12.2005 CN 200510132798
(71) Applicant: Huawei Technologies Co., Ltd., Longgang District Shenzhen 518129 (CN)
(72) Inventor: TENG, Xindong, Guangdong 518129 (CN)
(74) Representative: Casalonga, Axel
(86) International application number: PCT/CN2006/002256
(87) International publication number: WO 2007/073649

(57) **Abstract**

A method and system for obtaining path maximum transfer unit in network, include first, at the path start node sending the second layer message which carries the path MTU field for carrying path MTU value and at each node which the second layer message passed renewing the MTU value in the field according to the values preserved in each node; then, when the second layer message arrives at the path terminal node, regarding the MTU value being carried in the path MTU field in the second layer message as the path MTU value corresponding with the path. The present invention acquires the size of path MTU by use of Ethernet network OAM process, avoids the failure of transmitting the OAM message to object end caused by the reason that the size of transmitted OAM message exceeds the MTU of path when the route itself is normal. Therefore, the present invention can increase the reliability of OAM message transmission effectively, and assure the reliability of OAM function realization in Ethernet network.

## Description

### Technical Field of the Invention

The present invention relates generally to network communication, and in particular to a technique for obtaining a path maximum transmission unit (MTU), in a network.

### Background of the Invention

With the development of the network communication technologies, Ethernet has gradually become the dominating technique for Local Area Network (LAN), because of its simple use and low price. Meanwhile, with the application of Gigabit and 10 Gigabit Ethernet, Ethernet is used in Metropolitan Area Network and Wide Area Network, gaining much wider application.

In order to make it easier to perform operation, administration and maintenance for Ethernet, it is necessary to implement corresponding operation, administration and maintenance (OAM) mechanism over Ethernet, thereby to improve the capability of administrating and maintaining Ethernet and ensure robust operation of Ethernet.

Currently, in Ethernet, functions of Ethernet OAM mainly include:
(1) Ethernet OAM function at Physical link level, for fault detection and notification of the Ethernet physical link between two equipments; and
(2) Ethernet OAM function at service level, mostly for connectivity administration of the link between end-to-end equipments. For example, an example of the end-to-end connection is a connection between users via a plurality of network devices.

In the following, functions of Ethernet OAM at service level will be explained with reference to an end-to-end network model. The functions of Ethernet OAM at service level mainly include:
fault detection function, for detecting hardware fault of both ends, such as link and node faults; and for detecting software faults, such as software errors, memory breakdown, configuration errors etc;
fault verification function, for confirming a detected fault via Loopback message, so as to isolate the fault in a subsequent procedure;
fault location and isolation function, for, after confirming the fault, locating the faulty site such as a link or a node, and then isolating it from the network, so as to ensure the correct operation of the network and diagnose processing of the fault; and
fault notification and alarm-prevention functions, in which the fault notification is for informing the upstream and downstream of the node of the fault information; and the alarm-prevention is for preventing the presence of too many notification messages in the network, which would lead to network breakdown.

In Ethernet, the realization of the above OAM functions requires the interaction of OAM messages at Ethernet Layer 2. The OAM messages are specified by a series of standard protocols, i.e., those OAM messages are sent and received based on Layer 2 maintenance domain.

The maintenance domain comprises a series of nodes, in which those nodes at the boundary are named Maintenance association End Point (MEP), and those in the middle of the domain are named Maintenance association Intermediate Point (MIP). The MEP is the main originator and receiver of Ethernet OAM messages, and includes a maintenance domain start end node and a maintenance domain terminal node. The MIP is mostly for forwarding the Ethernet OAM message originated by the MEP.

There are possibly many maintenance domains independent of and/or overlapping with each other in a real network. Thus, it is necessary to classify the maintenance domains into different levels, and the levels of the maintenance domains indicate various embedding relationships between the maintenance domains.

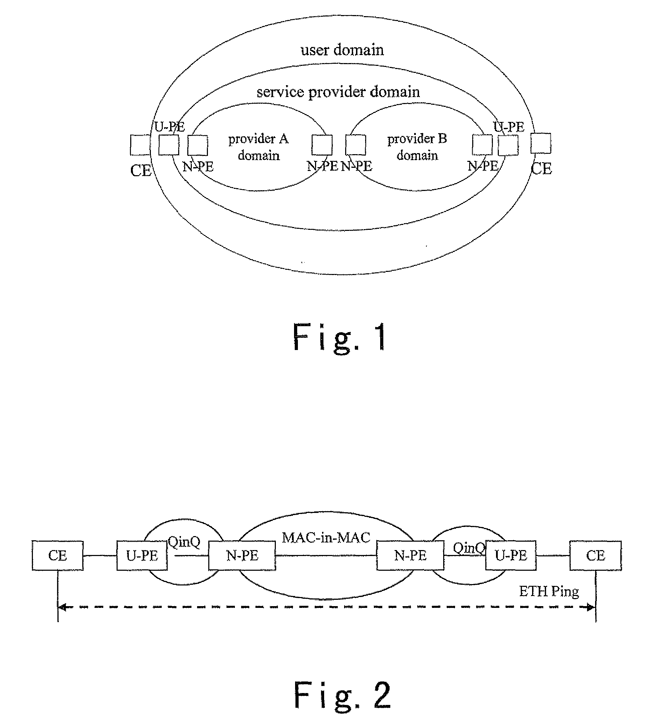

As shown in Fig. 1, a customer domain of level 7 is formed between Customer Edge Equipments (CEs), a service provider domain of level 4 is formed between U-PEs (user facing provider edge), two provider domains A and B of level 2 are in between N-PEs (Network Provider Edge), and domains of level 0 are formed between segments of physical links within the network provider domain. Here, each device is the MEP of the domain to which it belongs, and there may be a plurality of MIP nodes in the domain. For example, U-PE may be configured as the MIP of the customer domain, thus an OAM message sent by the CE may be forwarded at the U-PE. If there is a link fault in a domain of lower level, the MEP of that domain will inform the MIP node in the domain of an upper level, which would forward the message to the MEPs in its domain.

When transmitting OAM messages in the above maintenance domains of different levels, in order to guarantee the reliability of the message transmission, it is necessary to construct and transmit the OAM message according to the path maximum transmission unit (MTU) of the path that the messages pass. The MTU is a maximum length of the data message that the link layer can transmit. During message transmission, if the length of the constructed OAM message is larger than MTU, the message will be discarded or sliced.

Generally, the slicing OAM messages results in complicated processing and degrades the network performance, while the discarding OAM messages leads to messages not being able to reach the destination. Therefore, it is necessary, at the end point transmitting the message, to know the minimum MTU of the network path (i.e., path MTU) that the transmitted message will pass. Then it is possible to limit the message length within the minimum MTU, so as to avoid bad effect on the network processing, and ensure that corresponding messages can arrive at the destination reliably.

Currently, Layer 3 (i.e., the IP layer) message is used for detection to obtain the path MTU value in some networks. For example, User Datagram Protocol (UDP) messages of various lengths are sent from an originating end to detect the path MTU. In forwarding the message, if a node has an MTU smaller than the message length, the node will return an ICMP (Internet Control Message Protocol) message, indicating that the message needs to be sliced. At this time, the source end reduces the message length and detects once again. The procedure is repeated for several times to determine the size of the path MTU.

Since such method needs to transmit Layer 3 message for detection, but it is impossible to transmit Layer 3 message at Layer 2 network where the OAM message is to be transmitted. Therefore, the above method can not be used for obtaining a corresponding path MTU during implementing OAM function.

### Summary of the Invention

The objective of the present invention is to provide a method and system for obtaining a path maximum transmission unit which may be used in implementing OAM in the Ethernet, so that when implementing OAM in the Ethernet, the MTU of the path which an OAM message passes can be obtained and a corresponding path MTU can be obtained, thus ensuring that reliable transmission of the OAM message.

The objective of the present invention is realized by following technical solutions.

The present invention provides a method for obtaining a path maximum transmission unit (MTU) in a network, the method includes steps of:
transmitting, at a start node of a path, a Layer 2 message which comprises a path MTU field for carrying a path MTU value;
updating, at each of nodes which the Layer 2 message passes, an MTU value in the path MTU field according to MTU values stored at each node; and
taking the MTU value carried in the path MTU field of the Layer 2 message as a path MTU value corresponding to the path, when the Layer 2 message reaches a terminal node of the path.

Alternatively, the method of the present invention comprises following features:
The MTU value stored at each node may include:
   an MTU supported by the node, and/or
   a path MTU value corresponding to a path between the node and a correspondent node.

The path MTU field of the Layer 2 message transmitted at the path start node may carry an MTU value stored at the start node.

The step of updating the MTU value in the path MTU field according to MTU values stored at each node may include:
at a node that the Layer 2 message passes, when it is determined the MTU value stored at the corresponding node is smaller than the MTU value in the Layer 2 message, placing the MTU value stored in the node into the path MTU field of the Layer 2 message, until the node is a destination end node of the path.

The method may further include steps of:
storing, at an end node of the path, the path MTU value corresponding to the path; and indexing the path MTU value by a correspondent node identification of the path.

The method may further include a step of:
initiating the transmission of the Layer 2 message via a command manually input or a predetermined event.

The Layer 2 message may further include:
a type length value, for designating a following field as the path MTU field; and/or
a path information field, for carrying identification information about two end nodes of the path corresponding to the path MTU value in the current message.

The method may further include a step of:
at a start node of the path in a Ethernet network, taking a loopback request message carrying the path MTU field as the Layer 2 message.

The step of taking the MTU value carried in the path MTU field of the Layer 2 message as the path MTU value corresponding to the path may include steps of:
at the terminal node of the path, returning a value in the path MTU field of the received loopback request message to the start node of the path via a loopback response message; obtaining, by the start node of the path, the MTU value in the path MTU field; and taking the MTU value as the path MTU value corresponding to the path.

The method may further include steps of:
in the Ethernet, when a node on an OAM maintenance path changes or a path MTU at the node changes, transmitting, by any end node of the maintenance path which obtains the change information, a notification to any end node of a corresponding maintenance path via an intermediate node of an upper level maintenance path; and updating, by the node receiving the notification, the stored path MTU value by transmitting the Layer 2 message;
   or,
in the Ethernet, transmitting periodically, by a source end node of each OAM maintenance path, the Layer 2 message to update the stored path MTU value.

The notification may be a message realization obtained by extending the IEEE 802.1ag protocol, the type of which is Notify, and which carries information indicating that the path MTU changes.

The method may further include steps of:
constructing a Layer 2 message of a length smaller than the path MTU value stored currently, when a service is disconnected in a Layer 2 path in the network, or the network comprises a node that does not support OAM, or there is no intermediate point configured between two end nodes of the path; transmitting the constructed Layer 2 message in the path; and determining the path MTU value based on a result of the transmission.

The steps of constructing, transmitting and determining may include steps of:
constructing a Layer 2 loopback request message at a source end node of the Layer 2 path in the Ethernet, wherein the Layer 2 loopback request message carries test data of length smaller than the path MTU value stored currently; performing a path MTU trial operation; and determining a new path MTU value according to a result of at least one path MTU trial operation.

The present invention further provides a system for obtaining a path maximum transmission unit, including a start end node of a maintenance domain, an intermediate node of the maintenance domain and a terminal node of the maintenance domain, the system further includes:
a Layer 2 message construction module, provided at the start end node of the maintenance domain, for constructing a Layer 2 message which comprises a path MTU field for carrying a path MTU value stored at the start end node of the maintenance domain;
an MTU field update module, provided at the intermediate node of the maintenance domain, for updating the path MTU value in the Layer 2 message according to a locally stored path MTU value, and forwarding the Layer 2 message; and
a path MTU value determination module, provided at the terminal node of the maintenance domain, for receiving the Layer 2 message and taking an MTU value in the path MTU field of the Layer 2 message as a determined path MTU value.

Alternatively, the system of the present invention further includes following features.

The system may further include:
a path MTU value storage module, provided at each of the nodes of the maintenance domain, for storing the MTU value of the path between the nodes.

The system may further include:
a path MTU value returning module, provided at the terminal node of the maintenance domain, for returning the determined path MTU value to the start end node via a message sent to the start end node of the maintenance domain.

It can be seen from the inventive technical solution that the present invention obtains a value of a path MTU through the Ethernet OAM procedure, thereby avoiding the case that the transmitted OAM message can not be transmitted to a destination end because the size of the OAM message exceeding the MTU of the path during the transmission path operates normally. Thus, the present invention can efficiently improve the reliability of OAM message transmission as well as the reliability of implementing OAM functions in Ethernet.

The present invention can be applied to maintenance of the network operation. For example, when a user service is disconnected, the present invention can be used to determine the fault reason (e.g., if it is due to a message size exceeding the path MTU value) and locate the fault accurately.

### Brief Description of the Drawings

Fig. 1 is a schematic diagram of an Ethernet maintenance domain;
Fig. 2 is a schematic diagram of Ethernet OAM loopback function;
Fig. 3 schematically shows an Ethernet OAM hierarchical relation;
Fig. 4 schematically shows an embodiment of the method according to the present invention;
Fig. 5 is a schematic diagram of a path MTU; and
Fig. 6 schematically shows an embodiment of the system according to the present invention.

### Embodiments of the Invention

An essential principle of embodiments of the present invention is to use a Layer 2 message to detect a path MTU in a Layer 2 path, so that the path MTU value of a corresponding path in the Layer 2 network is obtained, it is possible to transmit a message over the Layer 2 path according to the path MTU, and a transmission reliability of the Layer 2 message including OAM message is ensured.

In the following, the reason for needing the path MTU in the Ethernet will be explained in detail.

In the Ethernet, Ethernet service OAM functions realize an end-to-end connectivity fault management, such as the connectivity between CE and CE, through OAM message exchange. The process of realizing the connectivity management includes a link quality testing for a corresponding link. In the Ethernet, Layer 2 Ping function can be realized by a loopback function of the Ethernet OAM, thereby realizing the quality test of the corresponding link.

As shown in Fig. 2, when performing Layer 2 Ping (ETH Ping and Network Ping) from an MEP node (such as CE) to another MEP node (such as a correspondent CE), the source CE sends a Loopback request message to the correspondent CE. The request message may carry a corresponding testing data. Upon receiving the request message, the correspondent CE sends back a Loopback response message and returns the data in the original request message, as it was, to the CE, thereby performing the quality test operation of the corresponding link.

The Loopback request message used in the testing is of variable data length, thus Loopback messages of different lengths may be used to perform the link quality tests, such as, for time delay, jitter and packet loss rate etc. However, the MTUs supported by the equipments in the path that the Loopback request message passes may be different. In this case, it is possible that, though the connectivity of the transmission path is normal, the corresponding message can not be correctly transmitted due to the message size exceeding the MTU size of a certain part of link, thereby resulting in message loss.

To solve the above problem, it is required that an originating end of the Loopback request message (CE equipment) to obtain the minimum MTU of each segment of the path (i.e., taking the minimum MTU of the whole path as the path MTU), and to ensure that the length of the transmitted message matches the path MTU, thus any error will be avoided.

The solutions of embodiments of the present invention can meet the above requirement. An embodiment of the present invention provides a solution of finding path MTU on the MEP nodes (such as CE equipment) by use of the Ethernet OAM message, thereby improving a transmission reliability of Layer 2 message.

The detailed embodiments of the present invention will be explained with reference to the drawings in the following for further understanding of the present invention.

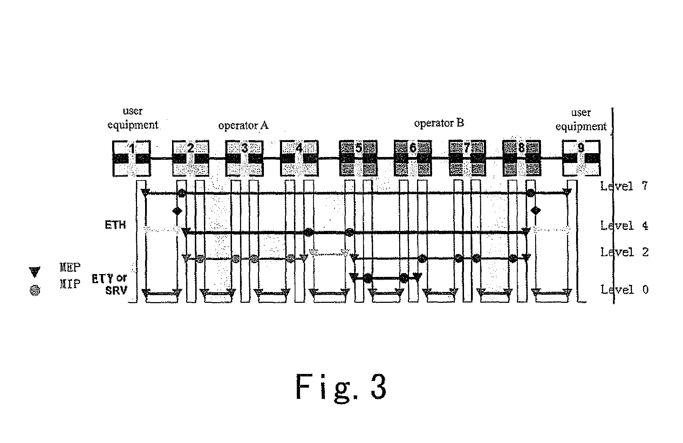

In Ethernet, the implementation of Ethernet OAM is hierarchical. As shown in Fig. 3, 9 nodes are shown in the drawing, including user equipments CEs at both ends, operators A and B connected by NNI (Network to Network Interface) and connected to the CEs via UNI (User to Network Interface).

In Fig. 3, a connecting line between nodes 1 and 9 indicates the interaction between CEs through Level 7 Ethernet OAM message. The nodes 1 and 9 are Maintenance association End Points (MEP), shown with triangles in the drawing. The internal area between the two MEPs is named a maintenance domain. Nodes 2 and 8 are Maintenance association Intermediate Points (MIP) in the maintenance domain, shown with circles in the drawing. The MEPs and MIPs in each maintenance domain are determined by configuration operation, and the OAM message in the corresponding maintenance domain will be processed by the MEPs and MIPs in the maintenance domain. The MIPs are responsible for forwarding the message.

Also, a straight line connected between nodes 2 and 8, as end points, together with the MEPs and MIPs on the line define another maintenance domain of Level 4.

In a word, in Fig. 3, other different independent connecting lines define different maintenance domains respectively, and levels of corresponding connecting lines are different.

Detailed embodiments of the present invention will be described based on the above description of the existing OAM maintenance domain in Ethernet.

In an embodiment of the present invention, MEPs (i.e., end points of the path) in maintenance domains are used for initiating a finding process on the path MTU. For example, if an MTU size of the path between nodes 1 and 9 needs to be found, node 1 or 9 can initiate a corresponding operation of finding the path MTU.

The path MTU value found by the nodes is obtained by detection of a Layer 2 message. Specifically, the Layer 2 message is obtained by extending the Loopback message, i.e., an optional MTU TLV (MTU type length value) field is added in the Loopback message, and the found path MTU value is detected via this field. It may also be realized by other Layer 2 message that can implement similar operation functions. In the following, an exemplary embodiment of using extended Loopback message as Layer 2 message will be explained.

The format of the extended Loopback message is shown in Table 1.

**Table 1**

| | 0 | 1 | 2 | 3 |
|---|---|---|---|---|
| 0 | type | length | | MTU size |
| 4 | MP1 ID | MP2 ID | | |

In Table 1, definitions on the fields are as follows:
type/length: standard definition conforming to IEEE 802.1ag, indicating it is an MTU TLV;
MTU size: the path MTU value, for carrying the minimum MTU value of each segment of the path that the message has passed;
MP1 ID/MP2 ID: for carrying the start and terminal nodes of the path corresponding to the MTU value respectively. MP1 and MP2 are end points on the segment of the path, and the MP may be a MEP or an MIP.

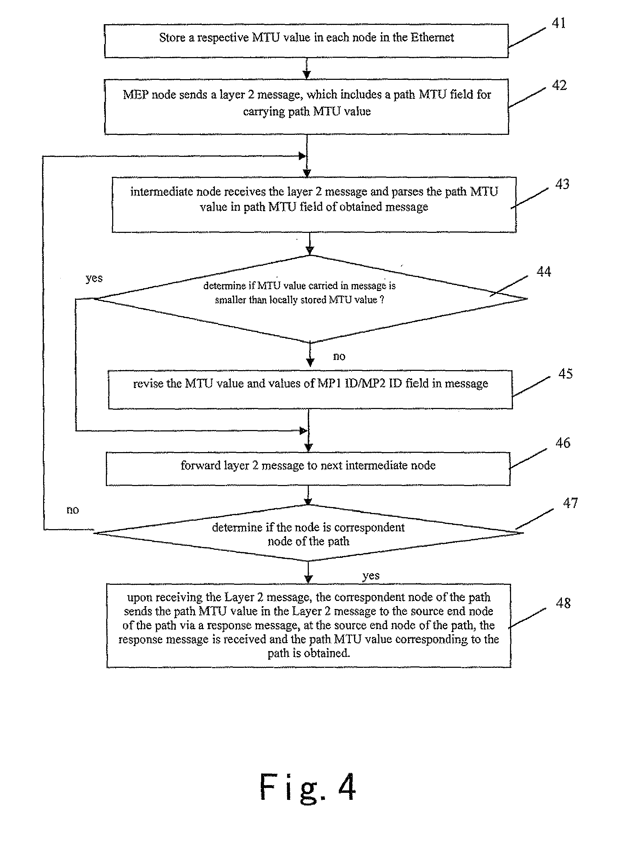

By use of the extended Loopback message in Table 1, the finding process on the path MTU can be performed in the Ethernet. The process of finding the corresponding path MTU is shown in Fig. 4, and specifically includes the following steps:

Step 41, storing a respective MTU value in each node.

MTU values stored in each node may include the MTU value supported by a node, as well as the path MTU value of a path between a node and a correspondent node. Initially, only an MTU value supported by the node is stored in the node. After executing the process of finding the path MTU in the embodiment, the path MTU value stored in each node further includes an MTU value of the path between nodes. To be exact, the MTU value originally supported by the node is kept unchanged, and the MTU value of the path between nodes is stored by use of a new variable.

Step 42, the MEP node being required to find the path MTU value sends a Layer 2 message, which includes a path MTU field for carrying a path MTU value.

The setting of the MTU field in the message allows the node receiving the message to identify that the message is a message finding MTU value, and allows the field to carry a smaller path MTU value for forwarding.

This step specifically includes that: after the system starts up, if a MEP node of a maintenance domain is configured, then the MEP node sends to each correspondent MEP node a Loopback message as shown in Table 1, which carries MTU TLV. The size of the MTU is the size of the MEP to a first MIP.

Step 43: upon receiving the Layer 2 message, an intermediate node parses the path MTU value carried in the path MTU field of the received message.

Step 44: the MTU value carried in the message is compared with the locally stored MTU value, and, for example, it is determined whether the MTU value carried in the message is smaller than the locally stored MTU value. If the MTU value carried in the message is smaller than the locally stored MTU value, it proceeds to step 46, otherwise, to step 45.

That is to say, when the Layer 2 message passes each MIP, if the MIP finds that the message includes an MTU TLV, it will check if the value stored therein is larger than the path MTU value of the next segment of path that the MIP stores, if yes (i.e., the locally stored path MTU value of the next segment of link is smaller than the value in the message), step 45 is executed; otherwise, step 46 is executed.

Step 45: the MTU value together with values of the MP1 ID/MP2 ID field in the message are revised. To be specific, the locally stored MTU value is placed in the path MTU field of the message and a segment identification of the path corresponding to the MTU value is updated. Next, step 46 is executed.

Step 46: the Layer 2 message is forwarded to a next node.

Step 47: it is determined whether the node is a correspondent node of the path; if yes, step 48 is executed; otherwise, step 43 is executed.

That is, step 43 is executed repeatedly when the message reaches the next MIP, until the message arrives at the correspondent MEP. At this time, the MTU value stored in the Loopback message is the path MTU.

Step 48: upon receiving the Layer 2 message, the correspondent node of the path sends the path MTU value in the Layer 2 message to the source end node of the path via a response message. Till now, the path MTU value corresponding to the path is obtained at the source end node of the path.

That is, after the correspondent MEP receives the Loopback message, it sends a Loopback response message to the source end node. The response message includes the MTU TLV, i.e., the MTU TLV will not be further modified during sending the Loopback response message back to the source end MEP. The source end MEP receives the Loopback response message, and can parse the message to obtain the path MTU value required.

The detected path MTU value needs to be stored at the source end MEP of the path. The stored path MTU value is indexed by the destination MEP of the path, to indicate that the path MTU value is the path MTU value corresponding to a link between the present end MEP to the destination end MEP.

In an embodiment of the present invention, the execution of step 42 may also be initiated by commands manually input or a predetermined event. That is, the MTU size of the path between the present node and a correspondent MEP can be detected by a manual command.

Furthermore, the detected MTU value might be inaccurate, in the case that the service of the Layer 2 path in the network is disconnected, or switches not supporting Ethernet OAM may be provided in the network path, or no MIP is configured between MEPs. In this case, the Loopback messages carrying testing data of different lengths may be utilized, i.e., carrying testing data of different lengths smaller than the presently stored path MTU value, to perform a path MTU trial operation. An appropriate path MTU value is determined by use of a trial result obtained by executing one or more trial operations, where the length of the testing data is smaller than the path MTU value obtained by a finding procedure provided by the embodiment of the present invention.

In the following, a detailed embodiment of the present invention will be explained with reference to an exemplary application.

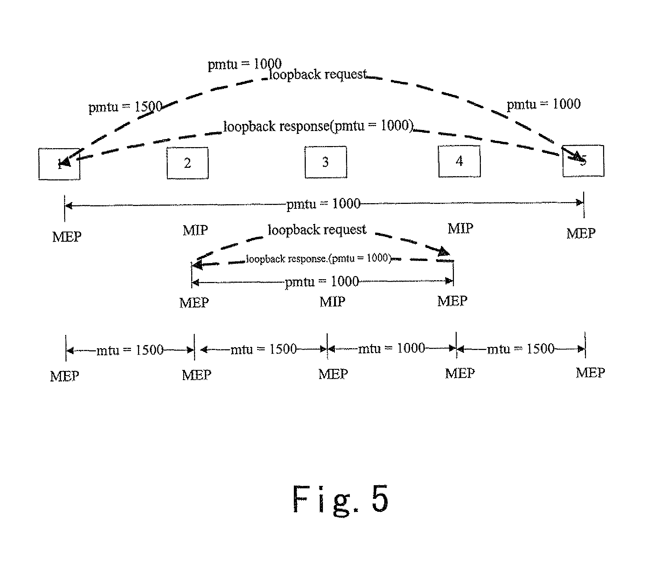

As shown in Fig. 5, it is assumed that the MTU values corresponding to four segments of a physical link between nodes in the drawing are 1500, 1500, 1000 and 1500 respectively, it follows that:
(1) The path MTU corresponding to the link between nodes 2 and 4 may be obtained by sending a Loopback request at node 2. To be specific, firstly, node 2 sends a Loopback request message to node 3, with the PMTU (path MTU) in the message being 1500 when the message arrives at the MIP (i.e., node 3). After updated by node 3, the path MTU value in the message is changed to be 1000. When the message arrives at the MEP (i.e., node 4), since the path MTU value was updated at node 3, node 4 sends a Loopback response message back to node 2; and the PMTU value of 1000 is stored at node 2, as the path MTU between nodes 2 and 4.
(2) The path MTU value corresponding to the link between nodes 1 and 5 may also be obtained by sending a Loopback request message. Two MIPs are provided between nodes 1 and 2. When the message arrives at the first MIP (node 2), PMTU=1500. When the message arrives at the second MIP (node 4), PMTU=1000 (this is due to that PMTU between nodes 2 and 4 is 1000, which is smaller than 1500). When the message arrives at the MEP (node 5), the PMTU is still 1000. This path MTU value is returned to node 1 via a Loopback response message, and is stored at node 1, as the path MTU value between nodes 1 and 5.

In the Ethernet, when the path MTU of a link between two nodes changes, or the configuration of nodes (such as MEP, MIP) changes, for example, by modifying path MTU, or adding or deleting MEP/MIP, path MTU values stored at related MEPs need to be updated. The updating procedure may be realized by the following two methods:
(1) The MEP nodes on each path initiate the process of updating the path MTU periodically. The updating processing is shown in Fig. 4. Specifically, a timer may be configured at a MEP. When a timing of the timer expires, the path MTU information of a correspondent MEP is checked, i.e., the process of updating the path MTU is executed;
(2) The MEP first getting to know the changes of the MTU information sends a notification message to a related MIP in a maintenance domain of an upper level. The MIP forwards the notification message to the MEPs within the same maintenance domain. The MEPs receiving the notification message initiate a process of updating the path MTU, so as to update information on the path MTU value stored at the MEPs.

In this method, the notification message is obtained by extending IEEE 802.1ag protocol, and carries information notifying "MTU has changed". The type of the notification message is "Notify".

The above two methods may be used separately, i.e., one of the methods is used to update path MTU. Or, the above two methods may be used simultaneously, i.e., the methods are simultaneously used to update path MTU.

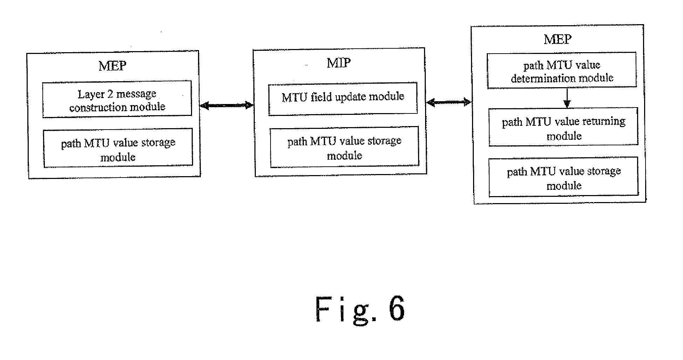

An embodiment of the present invention further provides a system for obtaining a path maximum transmission unit, which is shown in Fig. 6. The system includes:
a Layer 2 message construction module, provided at the start end node of the maintenance domain, for constructing the Layer 2 message carried in the path MTU field; the message carries the path MTU value stored at a MEP of the maintenance domain; the path MTU value may be the MTU value which is stored at a node and is supported by the node, or the path MTU value which is stored at a node and corresponds to a path between the node and other node;
an MTU field update module, provided at the intermediate node of the maintenance domain, for updating the path MTU value in the Layer 2 message according to the locally stored path MTU value; that is, when the locally stored path MTU value is smaller than the path MTU value in the Layer 2 message, the locally stored path MTU value is placed in the path MTU field of the Layer 2 message, and the Layer 2 message is forwarded; Fig. 6 shows only one intermediate node; however, the system may also include a plurality of intermediate nodes which are structured similarly to the shown intermediate node and are not shown in the drawing; and
a path MTU value determination module, provided at the terminal node of the maintenance domain, for receiving the Layer 2 message, and taking the MTU value in the path MTU field of the Layer 2 message as a determined path MTU value.

In the embodiment of the present invention, the system may further include:
a path MTU value storage module, provided at each node of the maintenance domain, for storing the MTU value of the path between the nodes, so that the stored MTU value can be used when determining the path MTU of the maintenance domain.

In an embodiment of the present invention, the system may further include:
a path MTU returning module, provided at the terminal node of the maintenance domain, for returning the determined path MTU value to the start end node of the maintenance domain, for example, by sending a message to the start end node of the maintenance domain. For example, the path MTU value may be returned to the start end node with the corresponding response message, thus the start end node can use the path MTU value when transmitting message.

In summary, in embodiments of the present invention, the size of the path MTU can be obtained by the Ethernet OAM procedures; the service disconnection caused by too long message in the case of the path being normal can be avoided during performing performance test on ETH Ping; and when a user service is disconnected, it can be checked if the disconnection is due to that the message length exceeds a path MTU value, thereby locating the fault precisely.

Although preferred embodiments of the present invention have been illustrated in the accompanying drawings and described in the foregoing detailed description, it will be understood that the invention is not limited to the embodiments disclosed. Those skilled in the art will be able to design various modifications and changes to the present invention without departing from the scope of the present invention which should be defined by the following claims.

## Claims

1. A method for obtaining a path maximum transmission unit (MTU) in a network, **characterized in that,** the method comprises steps of:
transmitting, at a start node of a path, a Layer 2 message which comprises a path MTU field for carrying a path MTU value;
updating, at each of nodes which the Layer 2 message passes, an MTU value in the path MTU field according to an MTU value stored at each node; and
taking the MTU value carried in the path MTU field of the Layer 2 message as a path MTU value corresponding to the path, when the Layer 2 message reaches a terminal node of the path.

2. The method for obtaining a path MTU in a network according to claim 1, **characterized in that,** the MTU value stored at each node comprises:
an MTU supported by the node, and/or
a path MTU value corresponding to a path between the node and a correspondent node.

3. The method for obtaining a path MTU in a network according to claim 1, **characterized in that**, the path MTU field of the Layer 2 message transmitted at the path start node carries an MTU value stored at the start node.

4. The method for obtaining a path MTU in a network according to claim 1, **characterized in that** the step of updating the MTU value in the path MTU field according to MTU values stored at each node comprises a step of:
at a node that the Layer 2 message passes, when it is determined the MTU value stored at the corresponding node is smaller than the MTU value in the Layer 2 message, placing the MTU value stored in the node into the path MTU field of the Layer 2 message, until the node is a destination end node of the path.

5. The method for obtaining a path MTU in a network according to claim 4, **characterized in that**, the method further comprises steps of:
storing, at an end node of the path, the path MTU value corresponding to the path; and
indexing the path MTU value by a correspondent node identification of the path.

6. The method for obtaining a path MTU in a network according to claim 1, **characterized in that** the method further comprises a step of:
initiating the transmission of the Layer 2 message via a command manually input or a predetermined event.

7. The method for obtaining a path MTU in a network according to claim 1, **characterized in that** the Layer 2 message further comprises:
a type length value, for designating a following field as the path MTU field; and/or
a path information field, for carrying identification information about two end nodes of the path corresponding to the path MTU value in the current message.

8. The method for obtaining a path MTU in a network according to any one of claims 1 to 7, **characterized in that** the method further comprises a step of:
at a start node of the path in an Ethernet network, taking a loopback request message carrying the path MTU field as the Layer 2 message.

9. The method for obtaining a path MTU in a network according to claim 8, **characterized in that**, the step of taking the MTU value carried in the path MTU field of the Layer 2 message as the path MTU value corresponding to the path comprises steps of:
at the terminal node of the path, returning a value in the path MTU field of the received loopback request message to the start node of the path via a loopback response message;
obtaining, by the start node of the path, the MTU value in the path MTU field; and
taking the MTU value as the path MTU value corresponding to the path.

10. The method for obtaining a path MTU in a network according to any one of claims 1 to 7, **characterized in that** the method further comprises steps of:
in the Ethernet, when a node on an OAM maintenance path changes or a path MTU at the node changes, transmitting, by any end node of the maintenance path which obtains the change information, a notification to any end node of a corresponding maintenance path via an intermediate node of an upper level maintenance path; and updating, by the node receiving the notification, the stored path MTU value by transmitting the Layer 2 message;
or,
in the Ethernet, transmitting periodically, by a source end node of each OAM maintenance path, the Layer 2 message to update the stored path MTU value.

11. The method for obtaining a path MTU in a network according to claim 10, **characterized in that** the notification is a message realization obtained by extending the IEEE 802.1ag protocol, the type of which is Notify, and which carries information indicating that the path MTU changes.

12. The method for obtaining a path MTU in a network according to any one of claims 1 to 6, **characterized in that** the method further comprises steps of:
constructing a Layer 2 message of a length smaller than the path MTU value stored currently, when a service is disconnected in a Layer 2 path in the network, or the network comprises a node that does not support OAM, or there is no intermediate point configured between two end nodes of the path;
transmitting the constructed Layer 2 message in the path; and
determining the path MTU value based on a result of the transmission.

13. The method for obtaining a path MTU in a network according to claim 12, **characterized in that** the steps of constructing, transmitting and determining comprise steps of:
constructing a Layer 2 loopback request message at a source end node of the Layer 2 path in the Ethernet, wherein the Layer 2 loopback request message carries test data of length smaller than the path MTU value stored currently;
performing a path MTU trial operation; and
determining a new path MTU value according to a result of at least one path MTU trial operation.

14. A system for obtaining a path maximum transmission unit, comprising a start end node of a maintenance domain, an intermediate node of the maintenance domain and a terminal node of the maintenance domain, **characterized in that** the system further comprises:
a Layer 2 message construction module, provided at the start end node of the maintenance domain, for constructing a Layer 2 message which comprises a path MTU field for carrying a path MTU value stored at the start end node of the maintenance domain;
an MTU field update module, provided at the intermediate node of the maintenance domain, for updating the path MTU value in the Layer 2 message according to a locally stored path MTU value, and forwarding the Layer 2 message; and
a path MTU value determination module, provided at the terminal node of the maintenance domain, for receiving the Layer 2 message and taking an MTU value in the path MTU field of the Layer 2 message as a determined path MTU value.

15. The system for obtaining a path maximum transmission unit according to claim 14, **characterized in that** the system further comprises:
a path MTU value storage module, provided at each of the nodes of the maintenance domain, for storing the MTU value of the path between the nodes.

16. The system for obtaining a path maximum transmission unit according to claim 14 or 15, **characterized in that** the system further comprises:
a path MTU value returning module, provided at the terminal node of the maintenance domain, for returning the determined path MTU value to the start end node via a message sent to the start end node of the maintenance domain.
